# EUROPEAN PATENT SPECIFICATION

(11) **EP 3 160 242 B1**
(45) Date of publication and mention of the grant of the patent: **05.06.2024**
(21) Application number: 15742123.1
(22) Date of filing: 29.06.2015
(51) Int. Cl.: A22C 21/00, B65G 47/51, B65G 47/84

(54) **METHOD AND APPARATUS FOR TRANSFERRING AND BUFFERING OBJECTS BETWEEN CONVEYORS**
VERFAHREN UND VORRICHTUNG ZUR ÜBERGABE UND PUFFERUNG VON GEGENSTÄNDEN ZWISCHEN FÖRDERERN
PROCÉDÉ ET DISPOSITIF POUR TRANSFÉRER ET TAMPONER DES OBJECTS ENTRE TRANSPORTEURS

(30) Priority: 30.06.2014 NL 2013099; 14.01.2015 NL 2014130
(43) Date of publication of application: 03.05.2017
(73) Proprietor: Foodmate B.V., 3281 NJ Numansdorp (NL)
(72) Inventor: VAN DEN BERG, Juul Floris, 3281 NJ Numansdorp (NL)
(74) Representative: V.O.
(86) International application number: PCT/NL2015/050473
(87) International publication number: WO 2016/003271

(56) References cited:
- EP-A- 0 259 920
- EP-A1- 0 736 255
- WO-A1-2013/033743
- US-A- 5 453 045
- US-A1- 2012 024 660

## Description

The invention relates to transferring and buffering objects between a discharge section of a first conveyor and a loading section of at least one second conveyor. In particular the invention is directed to a method and apparatus for transferring and buffering individual items of slaughtered poultry, such as chickens, turkeys or other birds, suspended from a first type of shackle in a first conveyor to a second type of shackle associated with at least one second conveyor.

In the processing of slaughtered poultry it is known to transfer bird carcasses between different conveyor systems. Such different conveyer systems may have equal or different capacities with respect to speed and/or spacing between individual bird carcasses. Often these bird carcasses have to be transferred between conveyor systems that each suspend the carcasses at a center spacing different from the other conveyor. It is also known to transfer slaughtered poultry carcasses between conveyors that differ in speed and/or otherwise in capacity. In some of the known transfer operations the transfer of such objects to be processed is therefore often combined with buffer means for accumulating a number of the objects during transfer to cope with the differences in speed or object spacing. An embodiment of such prior art is described in patent document US 4,813,101 and describes a device for selective transfer of slaughtered poultry. In this device a transfer station effects transfer of the slaughtered poultry from a first conveyor track to a second conveyor track. The transfer station includes a transfer wheel having a plurality of transfer carriers about its periphery, which can be either engaged by the transfer wheel to rotate with the transfer wheel or bear against a releasable stop to form a waiting line about the periphery of the transfer wheel.

Patent document US 5,453,045 describes a system for transferring birds from a weight line to a cut-up line through an intermediate accumulator.

These known buffering arrangements accumulate the objects or birds strictly in succession and also results in a friction force being exerted on the transfer wheel that increases with the number of transfer carriers and objects being accumulated. There has thus not only been a desire to eliminate friction forces and thereby improve energy efficiency, but also a wish not to be bound by the particular sequence of the buffered objects.

Accordingly it is an object of the present invention to propose an improved method and apparatus for transferring and buffering objects between a first conveyor and at least one second conveyor. In a more general sense it is thus an object of the invention to overcome or reduce at least one of the disadvantages of the prior art. It is also an object of the present invention to provide alternative solutions which are less cumbersome in assembly and operation and which moreover can be made relatively inexpensively. Alternatively it is an object of the invention to at least provide a useful alternative.

To this end the invention provides for a method and apparatus as defined in one or more of the appended claims, particularly in claims 1-16 and 17-24 respectively. Notably the invention provides for a method of transferring and buffering objects between conveyors, comprising: providing a first conveyor having a first path of conveyance; operating the first conveyor for transporting objects in a first transport direction; providing at least one second conveyor having a second path of conveyance; operating the at least one second conveyor for transporting objects in a second transport direction; providing a transfer conveyor having a transfer path; allowing the transfer conveyor with its transfer path to interfere with the first path of conveyance to define a receiving interface and with the second path of conveyance to define a release interface of the transfer conveyor; continuously moving the transfer conveyor for transferring objects from the receiving interface in a direction toward the release interface; and selectively releasing objects to the at least one second conveyor at the release interface of the transfer conveyor, characterized by further comprising: providing buffering means for accumulating at least one object outside of the transfer path; selectively taking objects moving from the receiving interface to the release interface from the transfer conveyor for temporary buffering by the buffering means, and selectively removing buffered objects from the buffering means for further movement to the release interface.

An example of the method, which is not encompassed by the wording of the claims but is considered as useful for understanding the invention, can also be defined by the steps of:
providing an entrance interface with a first conveyor to retrieve objects from the first conveyor and retrieving the objects; providing at least one exit interface with at least one second conveyor to deliver objects to the at least one second conveyor; providing buffering means for accumulating at least one object retrieved through the entrance interface; providing a transfer conveyor; and transport an object from the entrance interface to the at least one exit interface, including the optional steps of transporting selected ones of the retrieved objects from the entrance interface to the buffering means; and from the buffering means to the at least one exit interface, wherein during buffering the objects are kept outside of the path of the transfer conveyor.

Accordingly the method eliminates any friction that accumulated objects may exert on movement of the transfer conveyor. Also the method according to the invention as defined hereby will allow a sequence of the objects released from the at least one release or exit interface to be altered from a sequence of the objects at the receiving or entrance interface.

The invention also includes an apparatus as defined by the appended claims, particularly claims 17-24, that provides means for performing the steps of the method.

Further advantageous aspects of the invention will become clear from the appended description and in reference to the accompanying drawings, in which:
Figure 1 is an isometric view of an apparatus for transferring and buffering of poultry carcasses in accordance with the invention;
Figure 2 is an isometric detail view of a release interface of the apparatus of Figure 1;
Figure 3 is an isometric view showing in isolation a transfer conveyor of the apparatus of Figure 1;
Figure 4 is an enlarged detail view of a number of buffering stations in the apparatus of Figure 1;
Figure 5 is a general view in elevation of the underside of the apparatus of Figure 1;
Figure 6 is an elevation showing the underside of a mounting plate for use in the apparatus of Figure 1;
Figure 7 is an enlarged partial view of Figure 5 with only partly assembled components;
Figure 8 is a further enlarged detail of Figure 5, but now with all components in place;
Figure 9 is an isometric view of a modified embodiment of apparatus according to the invention for transferring and buffering poultry carcasses;
Figure 10 is an isometric view of the modified apparatus in a direction perpendicular to Figure 9;
Figure 11 is another isometric view of the apparatus of Figures 9 and 10 in a direction opposite to Figure 9, showing details of the inbound and outbound conveyors;
Figure 12 is a plan view from below in a direction looking upward showing the underside of the apparatus of Figures 9 and 10;
Figure 13 is an isometric view, similar to Figure 3, showing in isolation the transfer conveyor of the modified embodiment;
Figure 14 is an enlarged detail view showing a single buffering station of the modified embodiment; and
Figure 15 is a plan view of an upper side of a mounting plate of the modified embodiment, in which all but one of the actuators has been deleted for clarity.

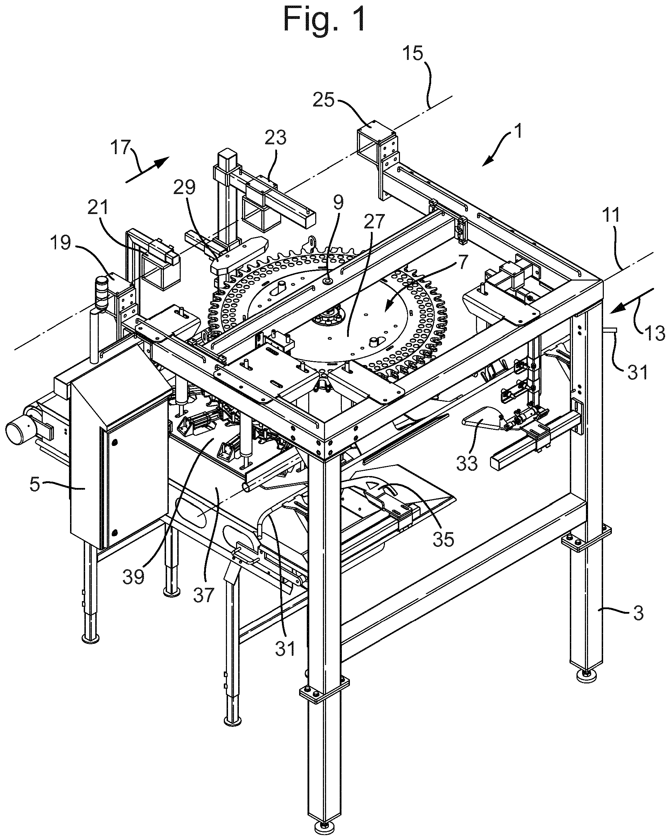

In Figure 1 an assembly 1 of an apparatus according to the invention is shown in a perspective view. The assembly 1 includes a frame 3 and a cabinet 5 for housing a control unit (not shown, but conventional). The apparatus will be generally referred to by reference numeral "1" and the control unit by reference numeral "5". Within the frame 3, a transfer conveyor assembly 7. The transfer conveyor assembly 7 is rotably supported about a vertically extending shaft 9 anchored in the frame 3. On one side of the transfer conveyor assembly 7 the frame is connected to a first conveyor (not shown, but conventional). The first conveyor extends along the line 11 and moves a plurality of equally spaced shackles in the direction of arrow 13. On an opposite side of the transfer conveyor assembly 7 a second conveyor extends along the line 15, and in this particular example moves a plurality of equally spaced shackles in an opposite direction corresponding to arrow 17. The frame 3 has lugs 19, 21, 23, 25 to exactly line-up with the second conveyor because a toothed drive wheel 27 of the transfer conveyor assembly 7 is driven by a connecting chain of the second conveyor (not shown, but conventional). To ensure proper engagement of the connecting chain of the second conveyor with the toothed drive wheel 27 a guide shoe 29 is adjustably positioned on the frame 3. A guide rail 31 guides the shackles of the first conveyor in proximity to the transfer conveyor assembly 7. This section of the first conveyor in close proximity to the transfer conveyor assembly 7 represents a receiving interface of the apparatus 1. At this receiving interface a pneumatically actuated ejector 33 and a guide member 35 are active to lift the legs of a poultry carcass (not shown, but conventional) from the hooks of its shackle and place same on the transfer conveyor assembly 7 as will be explained herein below.

At the opposite section where the transfer conveyor assembly 7 interferes with the second conveyor, at the line 15, along with the second conveyor extends, a release interface is formed. Positioned underneath the receiving interface and the release interface is a belt conveyor 37 to collect carcasses in the eventuality of a transfer failure. At a perimeter of the transfer conveyor assembly 7 outwardly of its path of conveyance between the receiving interface and the release interface a mounting plate 39 is mounted from the frame 3 to support buffering means as will be described herein below.

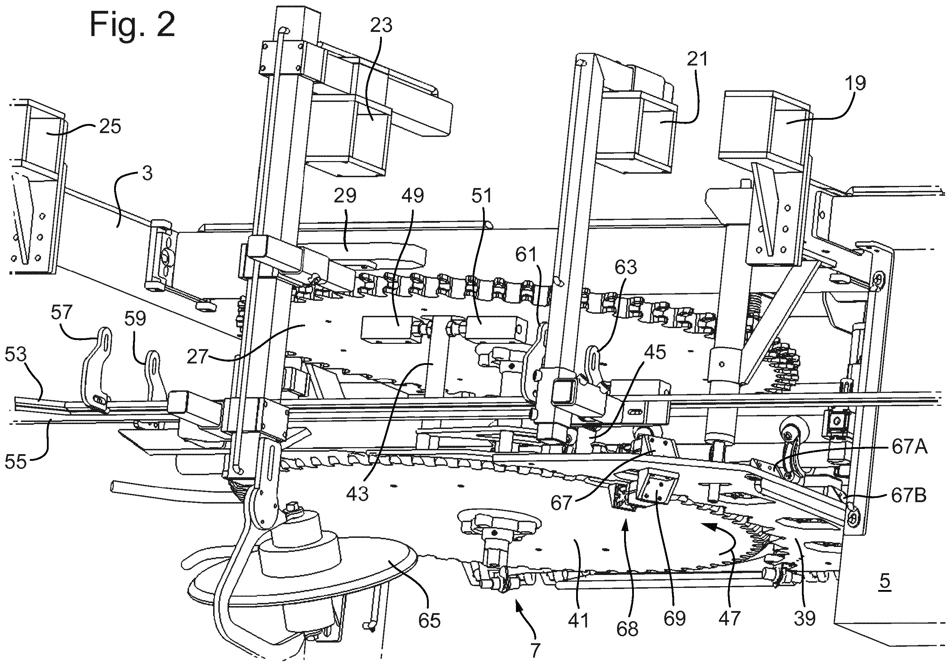

Figure 2 is a perspective detail view at the release interface of the transfer conveyor assembly 7. For clarity the second conveyor is not shown in Figure 2, but it is to be understood that the lugs 19, 21, 23, 25 will in use be firmly connected to a frame of the second coveyor. At a level inbetween the lugs 19-25 and the toothed drive wheel 27 a guide track of the second conveyor is adapted to extend. From this guide track a plurality of carriers will depend each associated with a shackle and interconnected for unitary movement by a link chain. Such interconnected carriers are conventional in the poultry processing industry and need not be described in detail. The link chain of the carriers of the second conveyor will engage with the perimeter of the toothed drive wheel 27. Positioned in parallel below the toothed drive wheel 27 is a transfer wheel 41. The transfer wheel 41 is engaged for rotation by the drive wheel 27 through engagement poles 43, 45 and will be rotated in the direction of arrow 47. The angular position of the engagement poles 43, 45 is accurately adjustable by adjusters 49, 51. In the proximity of the perimeter of the transfer wheel 41, opposite guide bars 53, 55 are provided for guiding the shackles of the second conveyor. The guide bars 53, 55 in use will be attached to the frame of the second conveyor by brackets 57, 59, 61, 63. With the shackles of the second conveyor thus accurately guided and moved to be in register with the transfer wheel 41, the carcasses carried by the transfer wheel 41 are delivered to the shackles of the second conveyor. A guide wheel 65 ensures that the legs of the carcasses of the slaughtered poultry are at an optimal angle for delivery to spaced leg receiving hooks of the shackles of the second conveyor.

Just visible in Figure 2 is that the mounting plate 39 which accomodates the buffering means, comprises a first actuator 67 and a second actuator 69 that are both associated with a main buffering station 68. Further first actuators 67A, 67B are associated with auxiliary buffering stations as will be described herein below.

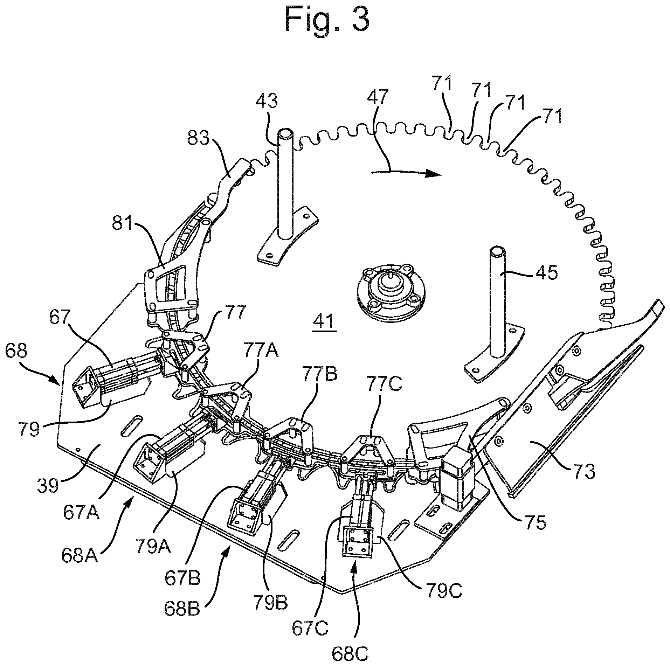

Figure 3 is a perspective view from above of the transfer wheel 41 together with mounting plate 39 isolated from the apparatus as illustrated in Figures 1 and 2. Transfer wheel 41, as explained above, is rotated in the direction of arrow 47 through the engagement poles 43, 45. About the periphery of transfer wheel 41 a plurality of spaced notches or recesses 71 is provided adapted to receive pairs of legs of individual items of slaughtered poultry carcasses. An infeed guide 73 is provided at the receiving or entrance interface for urging the legs of the individual carcasses one-by-one into an adjacent recess 71 of the transfer wheel 41. A transfer path entrance guide 75 ensures that the legs of the carcasses are retained in the recesses 71 of the transfer wheel 41. Downsteam of the entrance guide 75, which is mounted on the mounting plate 39, there is positioned a succession of auxiliary buffering stations 68A-68C, and one main buffering station 68. Each buffering station 68, 68A, 68B, 68C has a similar first type of actuator 67, 67A, 67B, 67C that includes a movable guide track section 77, 77A, 77B, 77C. The movable guide track sections 77, 77A-C are pneumatically movable between an extended and a retracted position by a respective one of the actuators 67, 67A-C. As shown in Figure 3 each of the actuators 67, 67A-C is mounted on a top side of the mounting plate 39 over an associated opening 79, 79A-C to allow a pneumatic circuit (not shown, but conventional), to be connected to the individual actuators 67, 67A-C. Downstream of the main buffering station 68 a transfer path exit guide 81 guides the carcass legs into engagement with an outfeed guide 83. The outfeed guide 83 is positioned in the release interface with the second conveyor and urges the carcass legs out of the recesses 71 of the transfer wheel 41 for delivery to the leg receiving hooks of the individual shackles of the second conveyor.

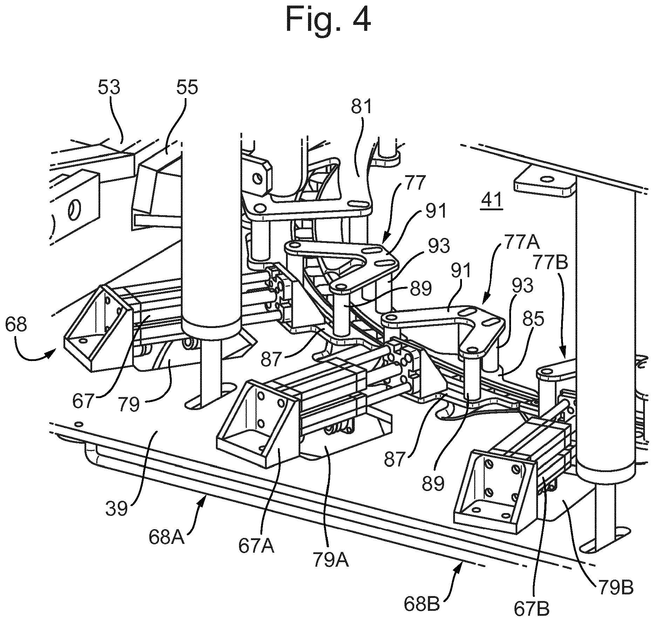

Figure 4 is an enlarged detail view of the main buffering station 68 and the auxiliary buffering stations 68A, 68B as referred to in Figures 2 and 3. To explain in more detail the movable guide track sections 77, 77A-C reference will notably be made to the main and first auxiliary buffering stations 68, 68A. Each movable guide track section 77, 77A forms a curved section of guide track between an opposite inner guide element 85, and an outer guide element 87. The outer guide element 87 is attached to an extendable and retractable part of the respective actuator 67, 67A. Mounted for movement with the outer guide element 87 is a pair of spacer columns forming an outer spacer assembly 89 to space an upper bridge connector 91. An inner spacer assembly 93 formed by another pair of columns, attaches the inner guide element 85 to the upper bridge connector 91.

As a result of this arrangement the movable guide track sections 77, 77A-C can be individually actuated to extend in-line with one another to form a guided path of transfer co-extending with the recesses 71 in the outer periphery of the transfer wheel 41, or to be retracted. When retracted the respective guide track section overlaps with individual pairs of cut-outs in the mounting plate 39, as will be explained herein below.

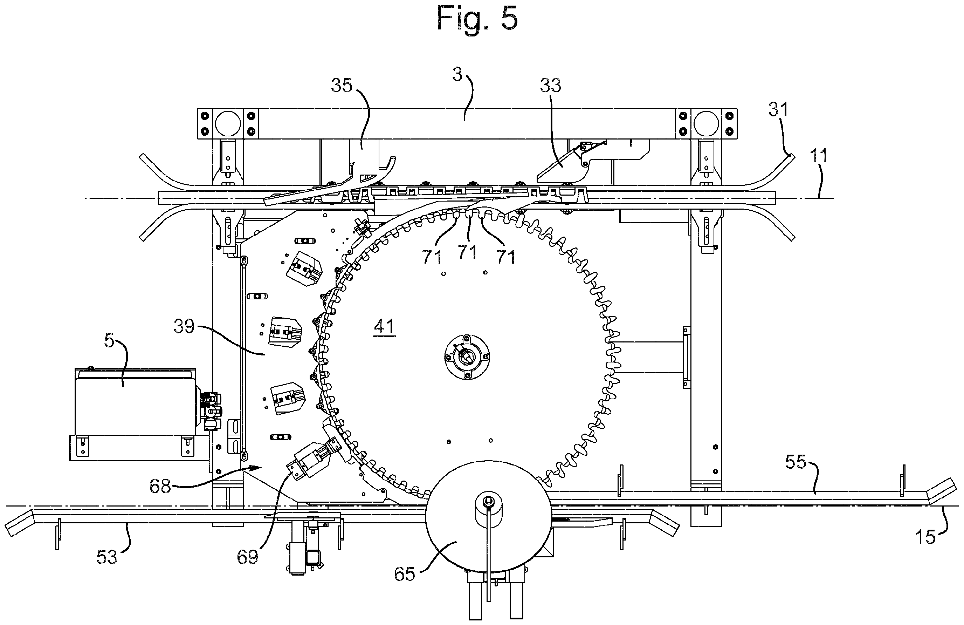

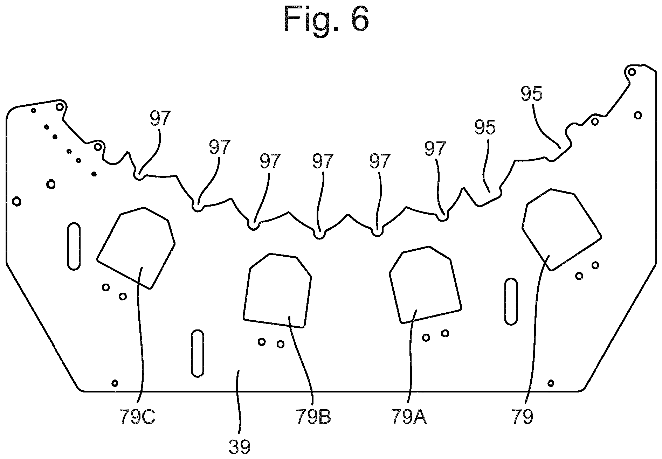

Figure 5 is a general view from below showing the underside of the apparatus 1 of Figure 1. More in particular, the underside of the mounting plate 39 and the notched transfer wheel 41 are shown. The reference numerals as indicated have already been explained herein above, but attention in particular is directed to the second actuator 69 associated with the main buffering station 68. The operation of this second actuator 69 will now be explained in reference to Figures 6-8.

Figure 6 shows the mounting plate 39 as an isolated component from below. The respective openings 79, 79A-C associated with the main and auxiliary buffering stations 68, 68A-C are indicated in the respective positions. Hence opening 79 is indicative of the main buffering station 68 and the openings 79A-C represent the first, second and third auxiliary buffering stations 68A-C. The main buffering station, represented by opening 79 in Figure 6 is associated with a pair of first buffering cutouts 95. The auxiliary buffering stations represented by the openings 79A-C each have a pair of second buffering cutouts 97. As will be clear from Figure 6 the first buffering cutouts 95 of the main buffering stations 68 are substantially wider than the second buffering cutouts 97 of the auxiliary buffering stations. The first and second buffering cutouts 95, 97 are each adapted to accommodate one leg each of a buffered carcass.

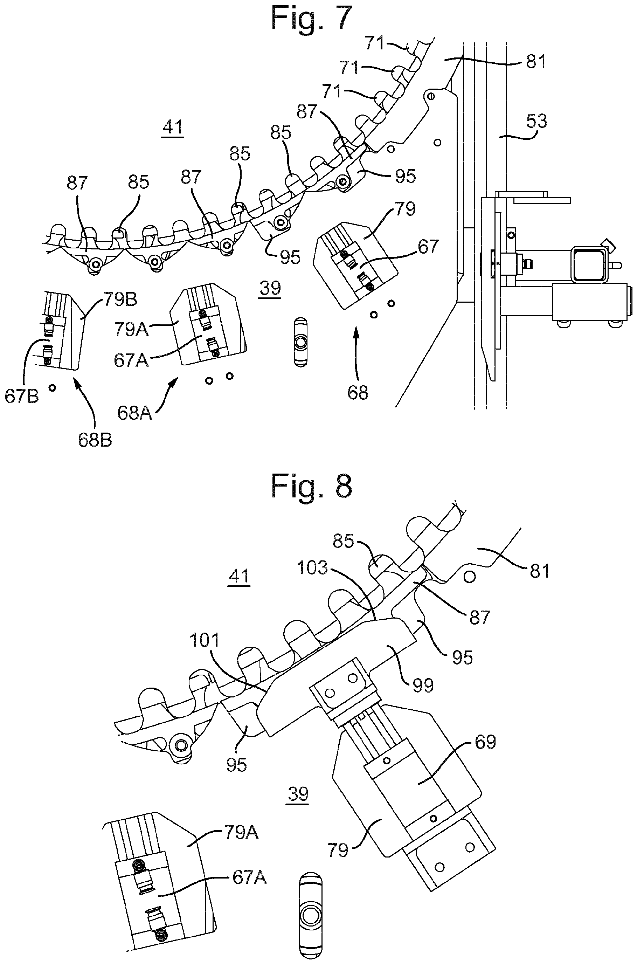

In Figure 7 an enlarged bottom view of a portion of Figure 5 is shown with the second actuator 69 removed to expose the first buffering cutouts 95 with the inner and outer guide elements 85, 87 of the main buffering station 68 just visible. For clarity the other reference numerals discussed herein above are also indicated in Figure 7.

Figure 8 is a further enlarged detail of the underside of the main buffering station 68, but now with the second actuator 69 in position. The second actuator 69 in Figure 8 is illustrated in a partially extended position. As a movable element this second actuator 69 carries a spreader 99 with oppositely inclined pusher edges 101, 103.

The operation of the main and auxiliary buffering stations 68, 68A-C is the same for taking carcasses from the transfer wheel 41 into the relevant pairs of first and second buffering cutouts 95, 97. Retrieving the legs of a carcass from the recesses 71 of the transfer wheel 41 is accomplished by selectively operating one of the first actuators 67, 67A-C to its retracted position. This moves the relevant movable guide track section 77, 77A-C out of register with respect to the transfer path of conveyance that coextends with the recesses 71 of the transfer wheel 41. The first and second buffering cutouts 95, 97 each have a shape that is adapted to guide the respective legs of a carcass into a deepest part of the relevant cutout. As long as the relevant movable guide track section 77, 77A-C remains in its retracted position, the carcass of the individual item of slaughtered poultry remains in a buffered position.

The main buffering station 68 has an additional function in also being able to spread the legs of a carcass to be in accordance with a different spacing in the shackles of the receiving second conveyor. This function is accomplished by simultaneously operating the second actuator 69 to an extended position, when the first actuator 67 of the main buffering station 68 is moved to its extended position. This action by means of the oppositekly inclined pusher edges 101, 103 places the legs of a carcass into a pair of recesses 71 of the transfer wheel 41 that are wider spaced from one another than the pair of recesses 71 form which the carcass was originally retrieved.

Conversely the auxiliary buffering stations 68A-C when their actuators 67A-C are operated to the extended position are only able to place the legs back into the transfer wheel 41 at the same leg spacing in which these were retrieved and which corresponds to the spacing in shackles of the first conveyor.

All carcasses are retrieved by the main buffering station 68 from the transfer wheel 41 from recesses 71 with individual legs spaced either corresponding to that of the first conveyor or as determined by the recesses 71 available at retrieval from the first conveyor. The control unit 5 of the apparatus 1 is arranged to ensure then that all carcasses are put back by the main buffering station 68 into relevant recesses 71 of the transfer wheel 41 at a spacing that is commensurate with the second conveyor. Carcasses that have previously been buffered in one of the auxiliary buffering stations 68A-C are also subjected to this procedure performed by the main buffering station 68.

Retrieving carcasses from the transfer wheel 41 is the same for the main buffering station 68 and all the auxiliary buffering stations 68A-C, in that the respective first actuators 67, 67A-C are operated to retract the associated guide track section 77, 77A-C. As regards the main buffering station 68 the second actuator 69 will remain in its retracted position during retrieval.

Hence the action of the main buffering station 68 is only different from the auxiliary buffering stations 68A-C, when returning a carcass back to the transfer wheel 41. The structure responsible for this difference in operation is in the additional second actuator 69 with spreader 99, the different cutouts 95 in the mounting plate 39, and in the control unit 5 being arranged to operate the second actuator 69 to an extended position, only when the first actuator 67 of the main buffering station 68 is also actuated to an extended position.

It will be clear that the number of main and auxiliary buffering station, described here by way of example, are not limited to this example. It is very well possible to operate more than one main buffering station and substantially more than three auxiliary buffering stations along a transfer path of the transfer conveyor. Also the particular sequence of buffering stations according to the described example is not bound to any particular order, provided that at least one main buffering station is closest to the release interface with the second conveyor.

By arranging the control unit 5 to cooperate with the first conveyor it is possible to track carcasses of a particular weight or size category, which by appropriate buffering can then be transferred to a selected second conveyor, when the transfer and buffer apparatus 1 is arranged to cooperate with more than one second conveyor.

It is also possible to use a plurality of transfer and buffer apparatuses 1, all interfacing with the same first conveyor, but interfacing with several individual second conveyors.

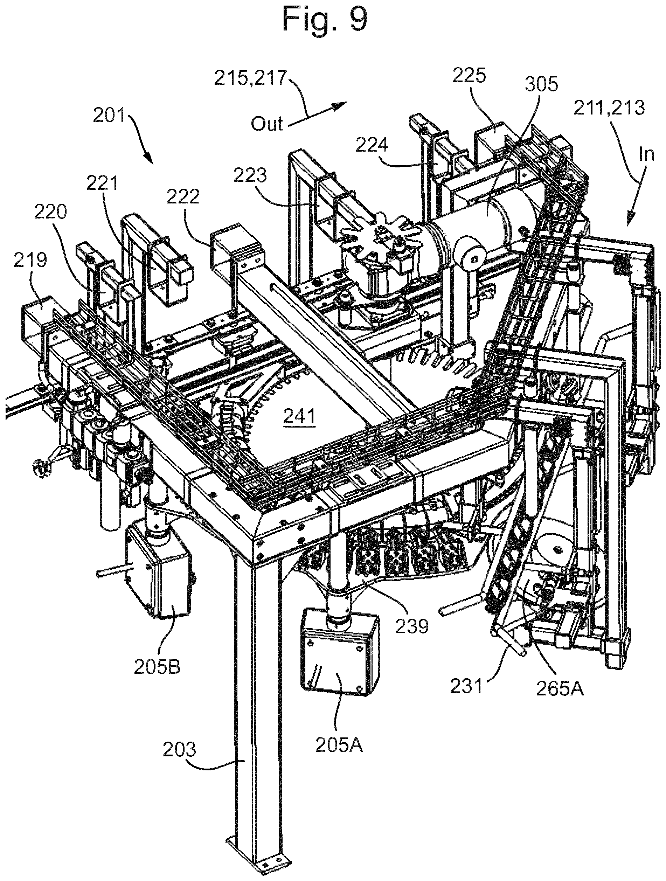

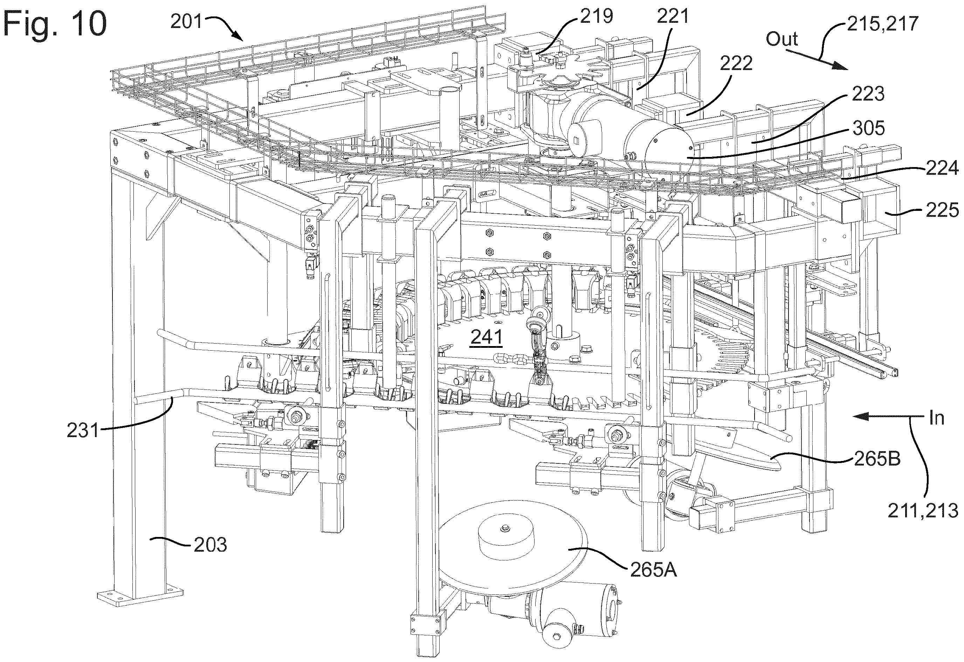

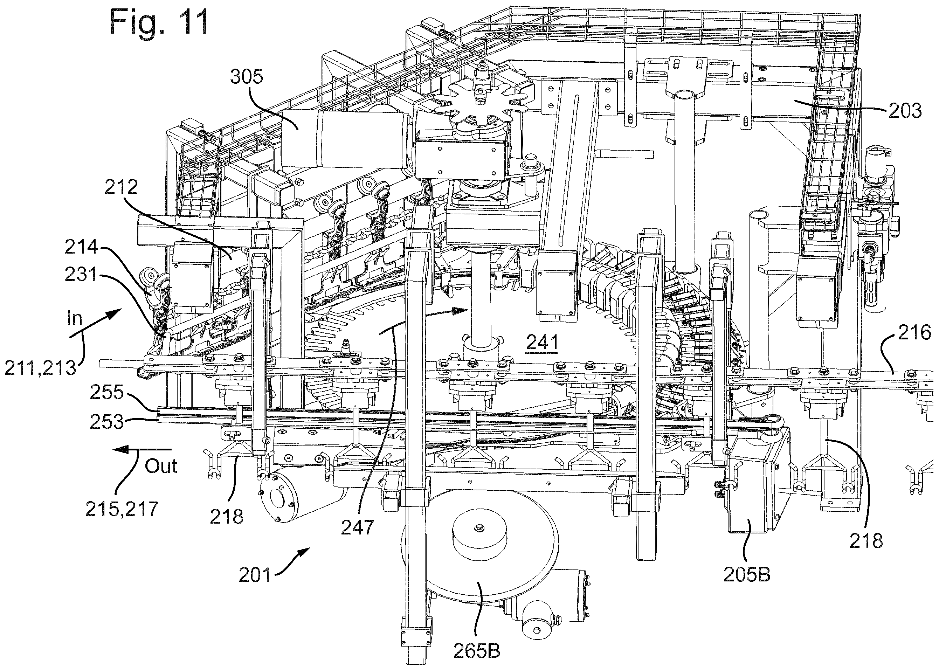

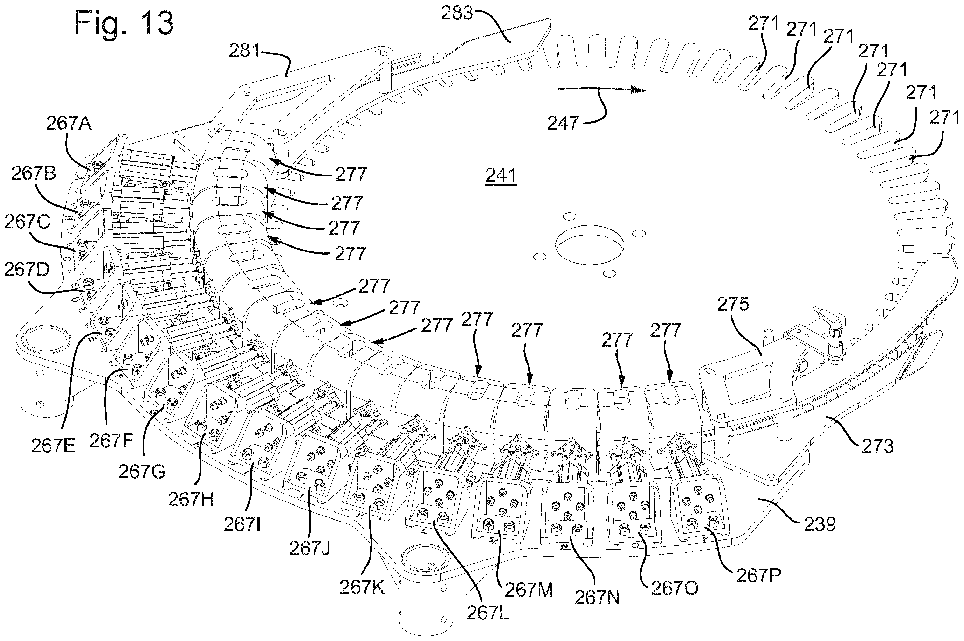

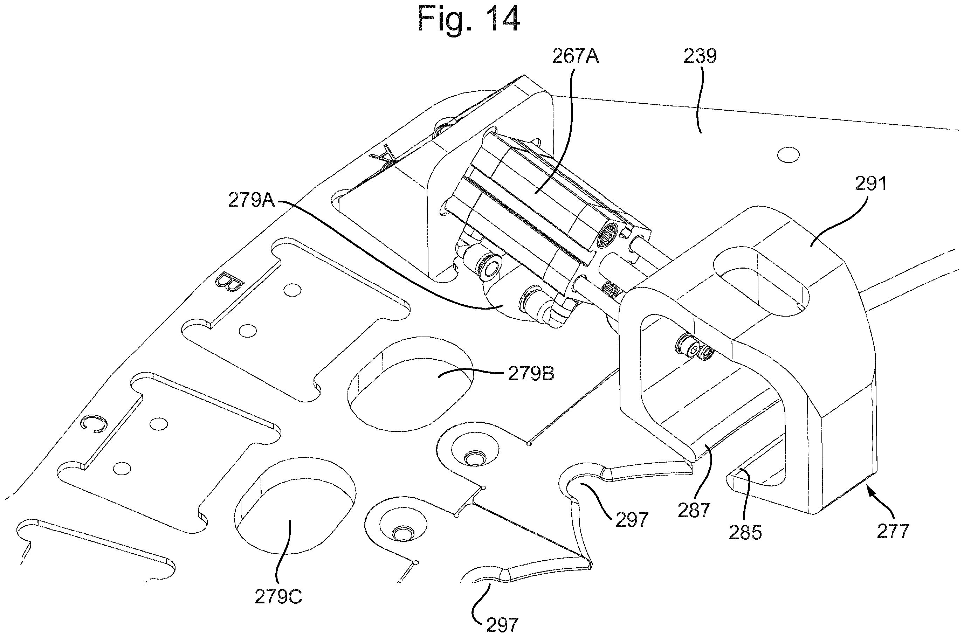

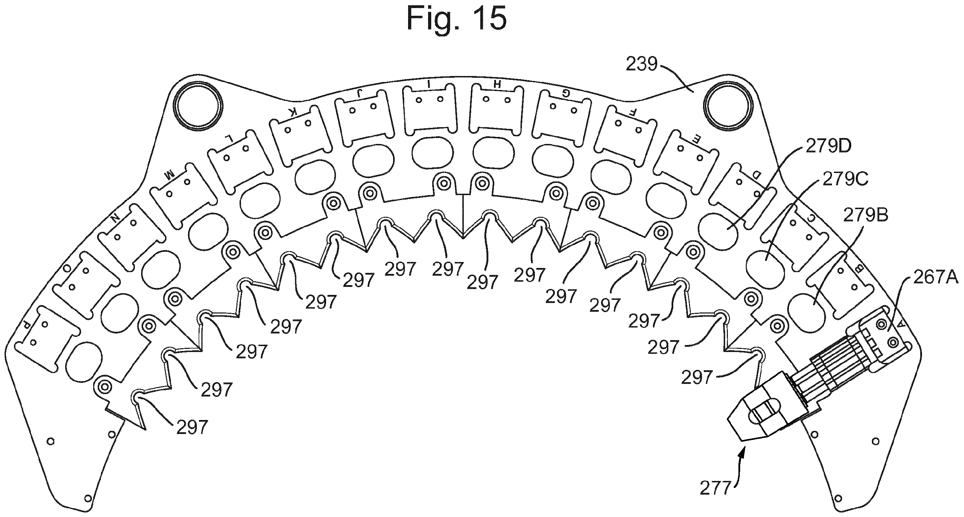

A modified further embodiment of the invention as illustrated in Figures 9 to 15 is referenced by reference numerals a full "200" higher to denote elements that are similar to those used in the description of Figures 1 to 8. The modified embodiment of an apparatus 201 for transferring and buffering objects is shown in directions perpendicular to one another in Figures 9 and 10. In Figure 11 the apparatus 201 is shown in another isometric view in a direction opposite to Figure 9 with details of first and second conveyors.

The apparatus 201 includes a frame 203 and and cabinets 205A, 205B for housing control units, such as electrically controlled pneumatic valves controlled from a computer controlled electronic bus sytem. The transfer and buffering apparatus 201 forms an intermediate transfer conveyor between an inbound first conveyor 212 and an outbound second conveyor 216. The extension 211 and direction 213 of the first inbound conveyor 212 are indicated by a single arrow. This inbound conveyor 212 can be a conveyor that supplies cleaned and eviscerated and weighed poultry carcasses suspended from first type of shackles 214 spaced at a first interval. Also the spacing between the legs from which the carcasses are suspended may also be specific to this first conveyor 212. The extension 215 and direction 217 of the second outbound conveyor 216 are also indicated by a single arrow. The second outbond conveyor 216 can be for a cut-up line for cutting the carcasses into meat products. In the outbound conveyor 216 the carcasses are suspended from second type of shackles 218, different from the first type of shackle or hanger 214 at a second interval different from the first interval. Also the leg spacing of the individual carcasses in each second type of shackle 218 may be different from that in the first type of shackle 214. Frame lugs 219-225 define the extend of the outbound second conveyor 216.

A guide rail 231 is provided for interfacing the apparatus 201 with the inbound first conveyor 212 by guiding the first type of shackles 214 of the first conveyor between a slot defined by the guide rail 231.

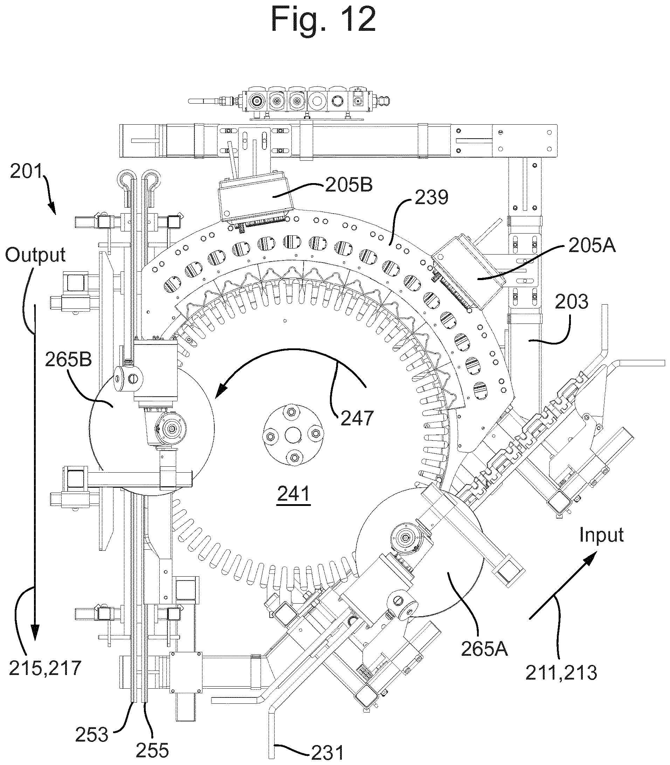

At an opposite side of the apparatus 201 the aligned plurality of frame lugs 219-225 define a release interface with the outbound conveyor 216. A mounting plate 239 for buffering means is located about a portion of the periphery of a transfer wheel 241. The transfer wheel 241 is arranged for rotation in the direction of arrow 247, as shown in Figures 11 and 12. In Figure12 the apparatus 201 is shown as viewed from below.

A pair of parallel guide bars 253, 255 defining a slot therebetween are provided for guiding the second type of shackles 218 of the outbound conveyor 216. A first guide wheel 265A is associated with the guide rail 231 to ensure that the legs of a poultry carcass are at an optimal angle for being received by the transfer wheel 241. A second guide wheel 265B is associated with the guide bars 253, 255 to ensure that the poultry carcass legs are at an optimal angle for release form the transfer wheel 241 to the outbound second conveyor 216. While engaged by the transfer wheel 241 the legs of the poultry carcasses are received in peripheral recesses 271 on the perimeter of the transfer wheel 241.

An infeed guide 273 assists in urging the poultry legs into adjacent recesses 271 of the transfer wheel 241. An entrance guide 275 downstream of the infeed guide 273 ensures that the poultry legs are retained in the respective recesses 271 until the buffering station is reached.

As further shown in Figures 9 to 12 the inbound conveyor's extension and direction 211, 213 is at an acute angle with the outbound conveyor's extension and direction 215, 217, rather than parallel as in the example of Figures 1 to 8. This angled arrangement of the inbound and outbound conveyors has as an advantage that a larger portion of the perimeter of the transfer wheel 241 can be made available for buffering carcasses outwardly of the perimeter of the transfer wheel.

The buffering station of the second embodiment as further illustrated in Figures 12-14 includes the mounting plate 239. A plurality of actuators 267A-267P are mounted on the mounting plate 239 and about the periphery of the transfer wheel 241 to each move a track section 277 radially inwardly and outwardly with respect to the transfer wheel 241. The actuators 267A-P are each pneumatic actuators of which one halve is associated with the first control unit 205A, and another halve is associated with the second control unit 205B to keep the pneumatic lines possibly short to reduce response time. The radially movable track sections 277 each have an inner guide edge 285 and an outer guide edge 287, and are individually moved by an associated actuator 267A-P for moving only a single poultry leg from a recess 271 into a buffering cutout 297 of the mounting plate 239 or vice versa.

Openings 279A-P are associated with the actuators 267A-P for leading pneumatic lines to the respective control units 205A on 205B.

Downsteam of the buffering station an exit guide 281 is positioned to guide the poultry legs into engagement with an outfeed guide 283. The outfeed guide 283 guides the poultry legs into engagement with the second type of shackles 218.

Generally the embodiment of Figures 9 to 15 differs from the that of Figures 1 to 8, in that a transfer conveyor wheel 241 is not driven by the outbound second conveyor 216, but by its own drive motor 305, and in that a second actuator and first pair of buffering cutouts are eliminated. This difference is made possible by the drive motor 305 being independent of the speed of either the inbound first conveyor 212 or the outbound second conveyor 216, and by each buffering cutout of the pair of second buffering cutouts 297 having associated with it an individual second actuator 267A-P. In the particular example described here the drive motor is synchronised to the speed of the outbound second conveyor 216. Each individual second actuator 267A-P can be independently actuated to place one leg of a poultry carcass into an individual recess 271 of the transfer wheel 241. The leg spacing is thereby controlled in accordance with the spacing between one or more of the recesses 271 into which the legs are introduced by independent operation of two succesive second actuators 267A to 267P.

Accordingly there is described a method and an apparatus 1; 201 arranged for transferring and buffering objects between conveyors cooperating with a first conveyor that defines a first path of conveyance 11; 211 and with at least one second conveyor that defines a second path of conveyance 15; 215. The first conveyor transports objects in a first direction 13; 213 and the at least one second conveyor transports objects in a second direction 17; 217. A transfer conveyor 7; 241 with a transfer path interferes with the first path of conveyance 11; 211 to form a receiving interface and with the second path of conveyance 15; 215 to form a release interface at the transfer conveyor 7; 241. The transfer conveyor 7; 241 transfers objects from the receiving interface toward the release interface.

Objects are selectively released to the at least one second conveyor at the release interface of the transfer conveyor. Buffering means 97; 297 are provided for accumulating at least one object. Objects moving from the receiving interface to the release interface can be taken out from the transfer conveyor 7; 241 for temporary buffering outside of the transfer path by the buffering means 97; 297 and buffered objects can selectively be removed from the buffering means 97; 297 for dispatch to the release interface. The apparatus 1; 201 includes the transfer conveyor 7; 241 and at least one buffering station 68, 68A-C that temporarily accumulates a selected object outside of the transfer path.

It is thus believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean `at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the scope of the invention, as is determined by the claims.

## Claims

1. Method of transferring and buffering objects between conveyors, comprising:
providing a first conveyor (212) having a first path of conveyance (11; 211);
operating the first conveyor for transporting objects in a first transport direction (13; 213);
providing at least one second conveyor (216) having a second path of conveyance (15; 215);
operating the at least one second conveyor for transporting objects in a second transport direction (17; 217);
providing a transfer conveyor (7; 241) having a transfer path;
allowing the transfer conveyor with its transfer path to interfere with the first path of conveyance (11; 211) to define a receiving interface and with the second path of conveyance to define a release interface of the transfer conveyor (7; 241);
continuously moving the transfer conveyor for transferring objects from the receiving interface in a direction towards the release interface; and
selectively releasing objects to the at least one second conveyor at the release interface of the transfer conveyor, further comprising:
providing buffering means (97; 297) for accumulating at least one object;
**characterised by** the steps of:
selectively taking objects moving from the receiving interface to the release interface from the transfer conveyor (7; 241) for temporary buffering outside of the transfer path, using the buffering means (97; 297), and
selectively removing buffered objects from the buffering means (97; 297) for further movement to the release interface.

2. Method according to claim 1, wherein the step of temporary buffering includes providing a main buffering station (68), and at least one auxiliary buffering station (68A-C).

3. Method according to one of claims 1 or 2, wherein the objects to be temporarily buffered are taken from the transfer conveyor in a direction substantially transverse to a direction of movement of the objects from the receiving interface to the release interface.

4. Method according to one of claims 1-3, wherein the objects are retrieved from first carriers (214) by which they are held to the first conveyor (212) and delivered to second carriers (218) by which they will be held to the at least one second conveyor (216).

5. Method according to one of claims 1-4, further including a step of driving the transfer conveyor in synchronization with the at least one second conveyor, and wherein the step of driving the transfer conveyor in synchronization with the at least one second conveyor includes the driving of the transfer conveyor by one of (i) the at least one second conveyor, and (ii) an independent drive motor having its speed synchronized with the at least one second conveyor.

6. Method according to one of claims 1-5, wherein the first conveyor in capacity differs from the at least one second conveyor, and wherein on the first conveyor the objects are spaced at a first predefined center distance and wherein the at least one second conveyor transports the objects at a second predefined center spacing, different from the first center spacing.

7. Method according to claim 6, wherein the predefined second spacing is greater than the predefined first spacing.

8. Method according to one of claims 6 or 7, wherein the first conveyor is operated at a higher speed than the at least one second conveyor.

9. Method according to one of claims 1-8, wherein the at least on second conveyor is part of a plurality of second conveyors, each adapted to receive selected objects from the transfer conveyor.

10. Method according to one of claims 1-9, wherein each object to be transferred is a poultry carcass, and wherein the first conveyor and the at least one second conveyor are each overhead conveyors from which the poultry carcasses are suspended by their legs from carriers in the form of shackles in an inversed orientation.

11. Method according to one of claims 1-10, wherein each object to be transferred is a poultry carcass, and wherein each first carrier includes a first type of shackle with a pair of poultry leg receiving hooks spaced at a first distance, and wherein each second carrier includes a second type of shackle with a pair of poultry leg receiving hooks spaced at a second distance.

12. Method according to claim 11, wherein retrieving objects at the receiving interface includes lifting of the carcass legs from the first type of shackle of the first conveyor and guiding same into aligned notches (71, 271) of a transfer wheel (41, 241).

13. Method according to claim 12, wherein the notches (71, 271) are at a pitch that is commensurate with each of the leg spacing of the first conveyor and the leg spacing of the at least one second conveyor.

14. Method according to one of claims 10-13, wherein control and data storage means (5, 205A-B) are provided that are arranged for operating the buffer means, and for taking into account at least one of weight and size of the individual poultry carcasses in controlling transfer from the first conveyor to one of a plurality of second conveyors.

15. Method according to one of claims 1-14, wherein each object to be transferred is a poultry carcass, and wherein the buffering means releases the poultry carcass to the transfer conveyor with legs spaced in accordance with a second carrier formed as a second type of shackle.

16. Method according to one of claims 1-14, wherein each object to be transferred is a poultry carcass, and wherein the buffering means releases the legs of the poultry carcass individually to the transfer conveyor in accordance with the spacing required for the at least one second conveyor.

17. Apparatus for transferring and buffering objects between a first conveyor and at least one second conveyor, comprising:
a first conveyor (212) having a first path of conveyance (11; 211);
at least one second conveyor (216) having a second path of conveyance (15; 215);
a transfer conveyor (7; 241) defining a transfer path that is positioned in interference with the first path of conveyance (11; 211) to define a receiving interface and in interference with the second path of conveyance to define a release interface; and
a buffering station (97; 297) adapted to temporarily accumulate at least one selected object outside of the transfer path,
wherein the apparatus is arranged for performing the steps of:
operating the first conveyor for transporting objects in a first transport direction (13; 213);
operating the at least one second conveyor for transporting objects in a second transport direction (17; 217);
continuously moving the transfer conveyor for transferring objects from the receiving interface in a direction towards the release interface;
selectively releasing objects to the at least one second conveyor at the release interface of the transfer conveyor;
selectively taking objects moving from the receiving interface to the release interface from the transfer conveyor (7; 241) for temporary buffering outside of the transfer path, using the buffering station (97; 297); and
selectively removing buffered objects from the buffering station (97; 297) for further movement to the release interface.

18. Apparatus according to claim 17, wherein the transfer conveyor is positioned in interference with the first path of conveyance in a first transport direction of the first conveyor at the receiving interface, and in interference with the second path of conveyance in a second transport direction of the at least one second conveyor at the release interface, and wherein the second transport direction of the at least one second conveyor is opposite to the first transport direction of the first conveyor.

19. Apparatus according to claim 17 or 18, wherein the first conveyor with its first path of conveyance (11; 211), and the at least one second conveyor with its second path of conveyance (15; 215) are at an acute angle with respect to each other.

20. Apparatus according to one of claims 17, 18 or 19, wherein the transfer conveyor includes a transfer wheel arranged for rotation about a vertically extending axis.

21. Apparatus according to claim 20, wherein the transfer wheel has a perimeter edge provided with spaced notches adapted to accommodate legs of slaughtered poultry carcasses.

22. Apparatus according to claim 21, wherein the notches are at a pitch that is commensurate with each of the spacings of the first conveyor and the at least one second conveyor.

23. Apparatus according to one of claims 17-22, wherein control and data storage means are provided that are arranged for operating the buffer station.

24. Apparatus according to claim 23, , wherein when each object to be transferred is a slaughtered poultry carcass the control and data storage means are arranged for taking into account at least one of weight and size of the individual poultry carcasses in controlling transfer from the first conveyor to one of a plurality of second conveyors.

## Patentansprüche

1. Verfahren zum Transportieren und Puffern von Objekten zwischen Förderern, das Folgendes umfasst:
Bereitstellung eines ersten Förderers (212) mit einem ersten Förderweg (11; 211);
Betrieb des ersten Förderers zum Transport von Objekten in eine erste Transportrichtung (13; 213);
Bereitstellung mindestens eines zweiten Förderers (216) mit einem zweiten Förderweg (15; 215);
Betrieb des mindestens einen zweiten Förderers zum Transport von Objekten in eine zweite Transportrichtung (17; 217);
Bereitstellung eines Übergabeförderers (7; 241) mit einem Transportweg;
Ermöglichen, dass der Übergabeförderer mit seinem Transportweg mit dem ersten Förderweg (11; 211) interferiert, um eine Aufnahmeschnittstelle zu definieren, und mit dem zweiten Förderweg interferiert, um eine Freigabeschnittstelle des Übergabeförderers (7; 241) zu definieren;
kontinuierliches Bewegen des Übergabeförderers zum Übergeben von Objekten von der Aufnahmeschnittstelle in eine Richtung zur Freigabeschnittstelle; und
selektives Freigeben von Objekten an der Freigabeschnittstelle des Übergabeförderers an den mindestens einen zweiten Förderer,
was ferner Folgendes umfasst:
Bereitstellung von Puffermitteln (97; 297) zum Sammeln mindestens eines Objekts;
**gekennzeichnet durch** die folgenden Schritte:
selektives Entnehmen von Objekten, die sich von der Aufnahmeschnittstelle zur Freigabeschnittstelle bewegen, vom Übergabeförderer (7; 241) zur vorübergehenden Pufferung außerhalb des Transportweges unter Verwendung der Puffermittel (97; 297), und
selektives Entfernen von gepufferten Objekten aus den Puffermitteln (97; 297) zur weiteren Bewegung zur Freigabeschnittstelle.

2. Verfahren nach Anspruch 1, wobei der Schritt des vorübergehenden Pufferns die Bereitstellung einer Hauptpufferstation (68) und mindestens einer Hilfspufferstation (68A-C) umfasst.

3. Verfahren nach einem der Ansprüche 1 oder 2, wobei die vorübergehend zu puffernden Objekte vom Übergabeförderer in einer Richtung entnommen werden, die im Wesentlichen quer zu einer Bewegungsrichtung der Objekte von der Aufnahmeschnittstelle zur Freigabeschnittstelle verläuft.

4. Verfahren nach einem der Ansprüche 1 bis 3, wobei die Objekte von ersten Trägern (214), mit denen sie auf dem ersten Förderer (212) gehalten werden, entnommen und an zweite Träger (218) abgegeben werden, mit denen sie auf dem mindestens einen zweiten Förderer (216) gehalten werden.

5. Verfahren nach einem der Ansprüche 1 bis 4, das ferner einen Schritt des Antreibens des Übergabeförderers in Synchronisation mit dem mindestens einen zweiten Förderer umfasst, und wobei der Schritt des Antreibens des Übergabeförderers in Synchronisation mit dem mindestens einen zweiten Förderer den Antrieb des Übergabeförderers durch den (i) mindestens einen zweiten Förderer umfasst, und (ii) einen unabhängigen Antriebsmotor, dessen Geschwindigkeit mit dem mindestens einen zweiten Förderer synchronisiert ist, umfasst.

6. Verfahren nach einem der Ansprüche 1 bis 5, wobei sich die Kapazität des ersten Förderers von der des mindestens einen zweiten Förderers unterscheidet, und wobei auf dem ersten Förderer die Objekte in einem ersten vordefinierten Mittenabstand angeordnet sind und wobei der mindestens eine zweite Förderer die Objekte in einem zweiten vordefinierten Mittenabstand transportiert, der sich von dem ersten Mittenabstand unterscheidet.

7. Verfahren nach Anspruch 6, wobei der vordefinierte zweite Abstand größer ist als der vordefinierte erste Abstand.

8. Verfahren nach einem der Ansprüche 6 oder 7, wobei der erste Förderer mit einer höheren Geschwindigkeit betrieben wird als der mindestens eine zweite Förderer.

9. Verfahren nach einem der Ansprüche 1 bis 8, wobei der mindestens eine zweite Förderer Teil einer Vielzahl von zweiten Förderern ist, von denen jeder dazu geeignet ist, ausgewählte Objekte von dem Übergabeförderer aufzunehmen.

10. Verfahren nach einem der Ansprüche 1 bis 9, wobei jedes zu übergebende Objekt ein Geflügelkadaver ist und wobei der erste Förderer und der mindestens eine zweite Förderer jeweils Hängeförderer sind, an denen die Geflügelkadaver an ihren Beinen an Trägern in Form von Bügeln in umgekehrter Ausrichtung aufgehängt sind.

11. Verfahren nach einem der Ansprüche 1 bis 10, wobei jedes zu transportierende Objekt ein Geflügelkadaver ist und wobei jeder erste Träger einen ersten Typ von Bügel mit einem Paar von Geflügelbeinaufnahmehaken in einem ersten Abstand aufweist und wobei jeder zweite Träger einen zweiten Typ von Bügel mit einem Paar von Geflügelbeinaufnahmehaken in einem zweiten Abstand aufweist.

12. Verfahren nach Anspruch 11, wobei das Wiederaufnehmen von Objekten an der Aufnahmeschnittstelle das Anheben der Tierkadaverschenkel von der ersten Art von Bügel des ersten Förderers und das Führen derselben in ausgerichtete Kerben (71, 271) eines Übergaberades (41, 241) umfasst.

13. Verfahren nach Anspruch 12, wobei die Kerben (71, 271) in einem Abstand angeordnet sind, der jeweils dem Schenkelabstand des ersten Förderers und dem Schenkelabstand des mindestens einen zweiten Förderers entspricht.

14. Verfahren nach einem der Ansprüche 10 bis 13, wobei Steuer- und Datenspeichervorrichtung (5, 205A-B) vorgesehen sind, die zum Betrieb der Puffermittel und zum Berücksichtigen von mindestens einem von Gewicht und Größe der einzelnen Geflügelkadaver bei der Steuerung des Transportes von dem ersten Förderer zu einem einer Vielzahl von zweiten Förderern angeordnet sind.

15. Verfahren nach einem der Ansprüche 1 bis 14, wobei jedes zu übergebende Objekt ein Geflügelkadaver ist und wobei die Puffermittel den Geflügelkadaver an den Übergabeförderer mit Beinen freigeben, die in Übereinstimmung mit einem zweiten Träger, der als eine zweite Art von Bügel ausgebildet ist, beabstandet sind.

16. Verfahren nach einem der Ansprüche 1 bis 14, wobei jedes zu übergebende Objekt ein Geflügelkadaver ist und wobei die Puffermittel die Beine des Geflügelkadavers, entsprechend dem für den mindestens einen zweiten Förderer erforderlichen Abstand einzeln an den Übergabeförderer freigeben.

17. Vorrichtung zum Transportieren und Puffern von Objekten zwischen einem ersten Förderer und mindestens einem zweiten Förderer, die Folgendes umfasst:
einen ersten Förderer (212) mit einem ersten Förderweg (11; 211);
mindestens einem zweiten Förderer (216) mit einem zweiten Förderweg (15; 215);
einen Übergabeförderer (7; 241), der einen Transportweg definiert, der in Interferenz mit dem ersten Förderweg (11; 211) positioniert ist, um eine Aufnahmeschnittstelle zu definieren, und in Interferenz mit dem zweiten Förderweg, um eine Freigabeschnittstelle zu definieren; und
eine Pufferstation (97; 297), die geeignet ist, mindestens ein ausgewähltes Objekt außerhalb des Transportweges vorübergehend zu speichern,
wobei die Vorrichtung zur Durchführung der folgenden Schritte eingerichtet ist:
Betrieb des ersten Förderers zum Transport von Objekten in eine erste Transportrichtung (13; 213);
Betrieb des mindestens einen zweiten Förderers zum Transport von Objekten in eine zweite Transportrichtung (17; 217);
kontinuierliches Bewegen des Übergabeförderers zur Übergabe von Objekten von der Aufnahmeschnittstelle in Richtung zur Abgabeschnittstelle;
selektive Freigabe von Objekten an den mindestens einen zweiten Förderer an der Freigabeschnittstelle des Übergabeförderers;
selektive Entnahme von Objekten, die sich von der Aufnahmeschnittstelle zur Freigabeschnittstelle bewegen, vom Übergabeförderer (7; 241) zur vorübergehenden Pufferung außerhalb des Transportweges unter Verwendung der Pufferstation (97; 297); und
selektive Entnahme der gepufferten Objekte aus der Pufferstation (97; 297) zur weiteren Bewegung zur Freigabeschnittstelle.

18. Vorrichtung nach Anspruch 17, wobei der Übergabeförderer als Interferenz an der Aufnahmeschnittstelle mit dem ersten Förderweg in eine erste Transportrichtung des ersten Förderers und als Interferenz an der Abgabeschnittstelle mit dem zweiten Förderweg in einer zweiten Transportrichtung des mindestens einen zweiten Förderers positioniert ist, und wobei die zweite Transportrichtung des mindestens einen zweiten Förderers der ersten Transportrichtung des ersten Förderers entgegengesetzt ist.

19. Vorrichtung nach Anspruch 17 oder 18, wobei der erste Förderer mit seinem ersten Förderweg (11; 211) und der mindestens eine zweite Förderer mit seinem zweiten Förderweg (15; 215) in einem spitzen Winkel zueinander stehen.

20. Vorrichtung nach einem der Ansprüche 17, 18 oder 19, wobei der Übergabeförderer ein Übergaberad aufweist, das zur Drehung um eine vertikal verlaufende Achse angeordnet ist.

21. Vorrichtung nach Anspruch 20, wobei das Übergaberad einen Umfangsrand mit beabstandeten Kerben aufweist, die zur Aufnahme von Beinen von geschlachteten Geflügelkadavern geeignet sind.

22. Vorrichtung nach Anspruch 21, wobei die Kerben in einem Abstand angeordnet sind, der jedem der Abstände des ersten Förderers und des mindestens einen zweiten Förderers entspricht.

23. Vorrichtung nach einem der Ansprüche 17 bis 22, wobei Steuer- und Datenspeichermittel vorgesehen sind, die zum Betrieb der Pufferstation eingerichtet sind.

24. Vorrichtung nach Anspruch 23, wobei, wenn jedes zu überführende Objekt ein geschlachteter Geflügelkadaver ist, die Steuer- und Datenspeichermittel so eingerichtet sind, dass sie bei der Steuerung der Überführung von dem ersten Förderer zu einem einer Vielzahl von zweiten Förderern mindestens eines von Gewicht und Größe der einzelnen Geflügelkadaver berücksichtigen.

## Revendications

1. Procédé de transfert et de mise en tampon d'objets entre convoyeurs, comprenant les étapes consistant à :
fournir un premier convoyeur (212) ayant un premier chemin de transport (11 ; 211) ;
faire fonctionner le premier convoyeur pour transporter des objets dans une première direction de transport (13 ; 213) ;
fournir au moins un deuxième convoyeur (216) ayant un deuxième chemin de transport (15 ; 215) ;
faire fonctionner le au moins un deuxième convoyeur pour transporter des objets dans une deuxième direction de transport (17 ; 217) ;
fournir un convoyeur de transfert (7 ; 241) ayant un chemin de transfert ;
permettre au convoyeur de transfert avec son chemin de transfert d'interférer avec le premier chemin de transport (11 ; 211) pour définir une interface de réception et avec le deuxième chemin de transport pour définir une interface de libération du convoyeur de transfert (7 ; 241) ;
déplacer en continu le convoyeur de transfert pour transférer des objets depuis l'interface de réception dans une direction vers l'interface de libération ; et
libérer sélectivement des objets vers au moins un deuxième convoyeur au niveau de l'interface de libération du convoyeur de transfert,
comprenant en outre les étapes consistant à :
fournir des moyens tampons (97 ; 297) pour accumuler au moins un objet ; **caractérisé par** les étapes consistant à :
prendre sélectivement les objets se déplaçant de l'interface de réception à l'interface de libération depuis le convoyeur de transfert (7 ; 241) pour les mettre temporairement en tampon à l'extérieur du trajet de transfert, en utilisant les moyens de mise en tampon (97 ; 297), et
retirer sélectivement les objets mis en tampon des moyens tampon (97 ; 297) pour un déplacement ultérieur vers l'interface de libération.

2. Procédé selon la revendication 1, dans lequel l'étape de mise en tampon temporaire comprend la fourniture d'une station tampon principale (68) et d'au moins une station tampon auxiliaire (68A-C).

3. Procédé selon l'une des revendications 1 ou 2, dans lequel les objets à tamponner temporairement sont prélevés du convoyeur de transfert selon une direction sensiblement transversale à une direction de déplacement des objets depuis l'interface de réception vers l'interface de libération.

4. Procédé selon l'une des revendications 1 à 3, dans lequel les objets sont récupérés depuis des premiers transporteurs (214) par lesquels ils sont maintenus au premier convoyeur (212) et livrés vers des deuxièmes transporteurs (218) par lesquels ils seront maintenus à l'au moins un deuxième convoyeur (216).

5. Procédé selon l'une des revendications 1 à 4, comprenant en outre une étape d'entraînement du convoyeur de transfert en synchronisation avec le au moins un deuxième convoyeur, et dans lequel l'étape d'entraînement du convoyeur de transfert en synchronisation avec le au moins un deuxième convoyeur comprend l'entraînement du convoyeur de transfert par l'un parmi (i) le au moins un deuxième convoyeur, et (ii) un moteur d'entraînement indépendant dont la vitesse est synchronisée avec le au moins un deuxième convoyeur.

6. Procédé selon l'une des revendications 1 à 5, dans lequel la capacité du premier convoyeur diffère du au moins un deuxième convoyeur, et dans lequel sur le premier convoyeur, les objets sont espacés d'un premier espacement prédéfini et dans lequel l'au moins un deuxième convoyeur transporte les objets à un deuxième espacement central prédéfini, différent du premier espacement central.

7. Procédé selon la revendication 6, dans lequel le deuxième espacement prédéfini est supérieur au premier espacement prédéfini.

8. Procédé selon l'une des revendications 6 ou 7, dans lequel le premier convoyeur fonctionne à une vitesse supérieure à celle du au moins un deuxième convoyeur.

9. Procédé selon l'une des revendications 1 à 8, dans lequel ledit au moins un deuxième convoyeur fait partie d'une pluralité de deuxièmes convoyeurs, chacun étant adapté pour recevoir des objets sélectionnés depuis le convoyeur de transfert.

10. Procédé selon l'une des revendications 1 à 9, dans lequel chaque objet à transférer est une carcasse de volaille, et dans lequel le premier convoyeur et le au moins un deuxième convoyeur sont chacun des convoyeurs aériens auxquels les carcasses de volaille sont suspendues par leurs pattes à porteurs sous forme de manilles dans une orientation inversée.

11. Procédé selon l'une des revendications 1 à 10, dans lequel chaque objet à transférer est une carcasse de volaille, et dans lequel chaque premier support comprend un premier type de manille avec une paire de crochets de réception de pattes de volaille espacés d'une première distance, et dans lequel chaque deuxième support comprend un deuxième type de manille avec une paire de crochets de réception de pattes de volaille espacés d'une deuxième distance.

12. Procédé selon la revendication 11, dans lequel la récupération des objets au niveau de l'interface de réception comprend le levage des pattes de carcasse du premier type de manille du premier convoyeur et leur guidage dans des encoches alignées (71, 271) d'une roue de transfert (41, 241). ).

13. Procédé selon la revendication 12, dans lequel les encoches (71, 271) sont à un pas qui est proportionné à chacun de l'espacement des jambes du premier convoyeur et de l'espacement des jambes de l'au moins un deuxième convoyeur.

14. Procédé selon l'une des revendications 10 à 13, dans lequel des moyens de commande et de stockage de données (5, 205A-B) sont prévus pour faire fonctionner les moyens tampons et pour prendre en compte au moins le poids et la taille du des carcasses de volaille individuelles dans la commande du transfert du premier convoyeur vers l'un d'une pluralité de deuxièmes convoyeurs.

15. Procédé selon l'une des revendications 1 à 14, dans lequel chaque objet à transférer est une carcasse de volaille, et dans lequel le moyen tampon libère la carcasse de volaille vers le convoyeur de transfert avec des pattes espacées conformément à un deuxième support formé comme un deuxième type de manille.

16. Procédé selon l'une des revendications 1 à 14, dans lequel chaque objet à transférer est une carcasse de volaille, et dans lequel le moyen tampon libère les pattes de la carcasse de volaille individuellement vers le convoyeur de transfert conformément à l'espacement requis pour l'au moins un deuxième convoyeur.

17. Appareil de transfert et de mise en tampon d'objets entre un premier convoyeur et au moins un deuxième convoyeur, comprenant :
un premier convoyeur (212) ayant un premier chemin de transport (11 ; 211) ;
au moins un deuxième convoyeur (216) ayant un deuxième chemin de transport (15 ; 215) ;
un convoyeur de transfert (7 ; 241) définissant un chemin de transfert qui est positionné en interférence avec le premier chemin de transport (11 ; 211) pour définir une interface de réception et en interférence avec le deuxième chemin de transport pour définir une interface de libération ; et
une station tampon (97 ; 297) adaptée pour accumuler temporairement au moins un objet sélectionné à l'extérieur du trajet de transfert, dans laquelle l'appareil est agencé pour effectuer les étapes suivantes :
faire fonctionner le premier convoyeur pour transporter des objets dans une première direction de transport (13 ; 213) ;
faire fonctionner le au moins un deuxième convoyeur pour transporter des objets dans une deuxième direction de transport (17 ; 217) ;
déplacer en continu le convoyeur de transfert pour transférer des objets depuis l'interface de réception dans une direction vers l'interface de libération ;
libérer sélectivement des objets vers ledit au moins un deuxième convoyeur au niveau de l'interface de libération du convoyeur de transfert ;
prendre sélectivement des objets se déplaçant de l'interface de réception à l'interface de libération depuis le convoyeur de transfert (7 ; 241) pour une mise en tampon temporaire à l'extérieur du trajet de transfert, en utilisant la station de mise en tampon (97 ; 297) ; et
retirer sélectivement les objets mis en tampon de la station tampon (97 ; 297) pour un déplacement ultérieur vers l'interface de libération.

18. Appareil selon la revendication 17, dans lequel le convoyeur de transfert est positionné en interférence avec le premier chemin de transport dans une première direction de transport du premier convoyeur au niveau de l'interface de réception, et en interférence avec le deuxième chemin de transport dans une deuxième direction de transport de l'au moins un deuxième convoyeur au niveau de l'interface de libération, et dans lequel la deuxième direction de transport du au moins un deuxième convoyeur est opposée à la première direction de transport du premier convoyeur.

19. Appareil selon la revendication 17 ou 18, dans lequel le premier convoyeur avec son premier chemin de transport (11 ; 211) et le au moins un deuxième convoyeur avec son deuxième chemin de transport (15 ; 215) forment un angle aigu avec respect les uns envers les autres.

20. Appareil selon l'une des revendications 17, 18 ou 19, dans lequel le convoyeur de transfert comprend une roue de transfert agencée pour tourner autour d'un axe s'étendant verticalement.

21. Appareil selon la revendication 20, dans lequel la roue de transfert présente un bord périmétrique muni d'encoches espacées adaptées pour accueillir des cuisses de carcasses de volailles abattues.

22. Appareil selon la revendication 21, dans lequel les encoches sont à un pas qui est proportionné à chacun des espacements du premier convoyeur et du au moins un deuxième convoyeur.

23. Appareil selon l'une des revendications 17 à 22, dans lequel des moyens de commande et de stockage de données sont prévus et sont agencés pour faire fonctionner la station tampon.

24. Appareil selon la revendication 23, dans lequel lorsque chaque objet à transférer est une carcasse de volaille abattue, les moyens de contrôle et de stockage de données sont agencés pour prendre en compte au moins le poids et la taille des carcasses de volaille individuelles lors du contrôle du transfert depuis le premier convoyeur vers l'un d'une pluralité de deuxièmes convoyeurs.
